# EUROPEAN PATENT APPLICATION

(11) **EP 3 660 606 A1**
(43) Date of publication of application: **03.06.2020**
(21) Application number: 19212487.3
(22) Date of filing: 29.11.2019
(51) Int. Cl.: G05B 19/042, H05B 47/14

(54) **CLOUD-BASED LIGHT UNIT HEALTH MONITORING SYSTEM**

(30) Priority: 29.11.2018 IN 201811045101; 01.04.2019 US 201916372151
(71) Applicant: Rohr, Inc., Chula Vista, CA 91910-2098 (US)
(72) Inventor: PALANIAPPAN, Elangovan, Bangalore 560049 Karnataka (IN)
(74) Representative: Dehns

(57) **Abstract**

A cloud-based lamp health monitoring system is disclosed. The system may receive a powerup signal from a lamp assembly. The system may determine an elapsed operating time of the lamp assembly based on the powerup signal. The system may calculate a total operating time based on the elapsed operating time and may store the total operating time.

## Description

### FIELD

The present disclosure relates to aircraft lighting systems, and, more specifically, to aircraft exterior lamps and lighting systems.

### BACKGROUND

Aircraft often have one or more light assemblies which may tend to fail and benefit of replacement. Many exterior lamps are warranted by a manufacturer based on operating hours and failed lamps may be returned to the manufacturer for replacement under a warranty program. However, aircraft operators may tend to not report operating hours or may report inaccurate operating hours for failed lamps and lamp assemblies.

### SUMMARY

In various embodiments, a cloud-based lamp health monitoring system is disclosed. The system may receive a powerup signal from a lamp assembly. The system may determine an elapsed operating time of the lamp assembly based on the powerup signal. The system may calculate a total operating time based on the elapsed operating time and may store the total operating time.

In various embodiments, the system may calculate an operating time margin based on the total operating time and a warranty time threshold. In various embodiments, the system may generate an out of warranty alert in response to the operating time margin. In various embodiments, the system may generate a lamp replacement alert in response to the operating time margin. In various embodiments, the system may display via a warranty dashboard the operating time margin in response to a request to view lamp operating time data. In various embodiments, the system may receive a sensor data and transmit the total operating time to a manufacturer system in response to the sensor data. In various embodiments, the lamp assembly may comprise one of a landing light, a taxi light, or a navigation light.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft, in accordance with various embodiments;
FIG. 2 illustrates a block diagram of a cloud-based lamp health monitoring system, in accordance with various embodiments;
FIG. 3 illustrates a block diagram of a lamp assembly in a cloud-based lamp health monitoring system, in accordance with various embodiments; and
FIG. 4 illustrates a process flow in a cloud-based lamp health monitoring system, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with a tail (e.g., the back end) of an aircraft, or generally, to the direction of exhaust of a gas turbine engine. As used herein, "forward" refers to the direction associated with a nose (e.g., the front end) of the aircraft, or generally, to the direction of flight or motion.

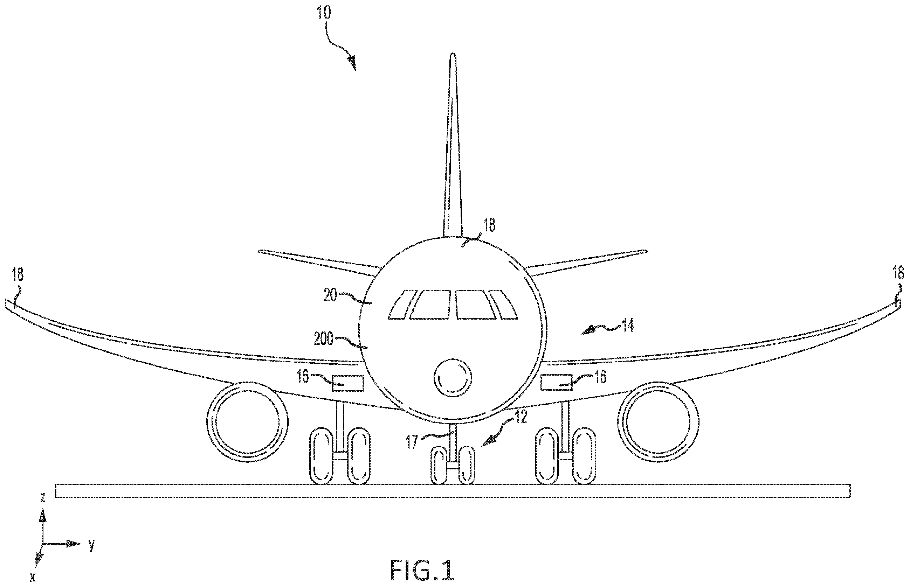

With reference to FIG. 1, an aircraft 10 in accordance with various embodiments may comprise aircraft systems, for example, one or more landing gear such as landing gear 12, which may generally support aircraft 10 when aircraft is not flying, allowing aircraft 10 to taxi, take off, and land without damage. Aircraft 10 may include one or more exterior lamps 14 such as, for example, landing lights 16, taxi lights 17, and navigation lights 18. Aircraft 10 may include any number of other exterior lamps 14 such as logo lights, runway turnoff lights, engine scan lights, anti-collision lights, strobe lights, beacon lights, cargo compartment lights, obstruction lights, landing gear lights, and/or the like. In various embodiments, aircraft 10 may include a cloud-based lamp health monitoring system 200 in communication with the exterior lamps 14 and/or cockpit controls 20.

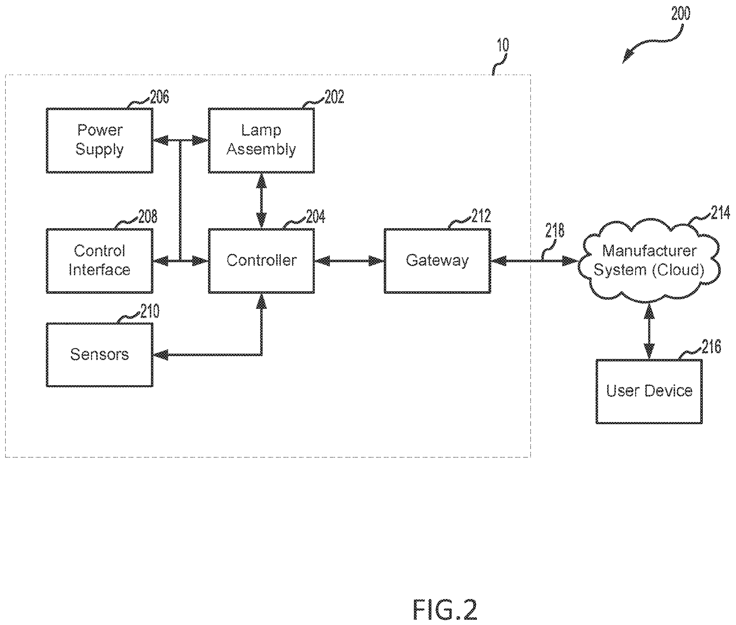

In various embodiments and with additional reference to FIG 2, a block diagram for a cloud-based lamp health monitoring system 200 of aircraft 10 is illustrated. System 200 includes a lamp assembly 202 such as, for example, one of landing lights 16, taxi lights 17, and/or navigation lights 18, a controller 204, a power supply 206, a control interface 208 of cockpit controls 20, sensors 210, a network gateway 212, a manufacturer system 214, and a user device 216.

Controller 204 may comprise at least one computing device in the form of a computer or processor, or a set of computers/processors, although other types of computing units or systems may be used. In various embodiments, controller 204 may be implemented as and may include one or more processors and/or one or more tangible, non-transitory memories and be capable of implementing logic. Each processor may be a general purpose processor, a digital signal processor (DSP), an application specific integrated circuit (ASIC), a field programmable gate array (FPGA) or other programmable logic device, discrete gate or transistor logic, discrete hardware components, or any combination thereof. Controller 204 may comprise a processor configured to implement various logical operations in response to execution of instructions, for example, instructions stored on a non-transitory, tangible, computer-readable medium configured to communicate with controller 204. In various embodiments, controller 204 may be integrated into computer systems onboard an aircraft, such as, for example a flight control system. In various embodiments, controller 204 may be integrated with a lamp assembly such as lamp assembly 202.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

Controller 204 may be in electronic communication with lamp assembly 202, power supply 206, control interface 208, sensors 210, network gateway 212, manufacturer system 214, and user device 216. Sensors 210 may be coupled to or in electronic communication with various systems of aircraft 10 and may be configured to transmit the measurements to controller 204, thereby providing sensor feedback about the aircraft system to controller 204. The sensor feedback may be, for example, a speed signal (e.g., a shaft speed, a wheel speed, an airspeed, a ground speed and/or the like), or may be position feedback, temperature feedback, pressure feedback and/or other data. Sensors 210 may comprise a temperature sensor, a torque sensor, a speed sensor, a pressure sensor, a position sensor, an accelerometer, a mass flow sensor, a voltage sensor, a current sensor, a humidity sensor, a luminosity sensor, or any other suitable measuring device known to those skilled in the art. In various embodiments, sensors 210 may report a weight on wheels condition of aircraft 10.

In various embodiments, controller 204 may be in electronic communication with a pilot of an aircraft through a control interface 208 such as, for example, a switch panel in a cockpit of the aircraft 10. The control interface 208 may display a status of the controller 204 and/or other system element status, may display measurements of sensors 210, may display a status of lamp assembly 202, and/or the like. Control interface 208 may provide command signals to controller 204 and/or power supply 206. In various embodiments, the command signals may be of the form 'ON', 'OFF', and/or the like.

Power supply 206 may be in electronic communication with and/or configured to supply power to any of controller 204, lamp assembly 202, control interface 208, sensors 210, and network gateway 212. Power supply 206 may be configured to be controlled by controller 204 in response to commands from controller 204. In various embodiments, in controller 204 may control the power supply in response to a temperature data from a temperature sensor. For example, controller 204 may control the power supply in response to the temperature data exceeding a temperature control threshold.

In various embodiments, manufacturer system 214 may be configured as a central network element or hub to access various systems, engines, and components of system 200. Manufacturer system 214 may comprise a network, computer-based system, and/or software components configured to provide an access point to various systems, engines, and components. Manufacturer system 214 may be in operative and/or electronic communication with controller 204, lamp assembly 202, sensors 210, control interface 208, power supply 206, and/or user device 216 via gateway 212. In this regard, manufacturer system 214 may allow communication from user device 216 to systems, engines, and components of system 200. In various embodiments, manufacturer system 214 may receive data 218 comprising operating time information associated with lamp assembly 202 from controller 204. In various embodiments, data 218 may include other sensor data or operational data such as, for example, temperature data and/or luminosity data associated with the lamp assembly 202. Manufacturer system 214 may be configured to store and maintain data relating to aircraft 10 such as, for example, lamp operating time data. Aircraft 10 may include a plurality of lamps and each of the plurality may be associated on a one-to-one basis with an operating time data. Manufacturer system 214 may store the data 218 using any suitable technique described herein or known in the art. In various embodiments, manufacturer system may include a cloud based machine learning system.

User device 216 may comprise software and/or hardware in communication with manufacturer system 214 via a network comprising hardware and/or software configured to allow an aircraft operator, a user, and/or the like, access to manufacturer system 214. User device 216 may comprise any suitable device that is configured to allow a user to communicate with a network and manufacturer system 214. User device 216 may include, for example, a personal computer, servers, pooled servers, laptops, notebooks, hand held computers, personal digital assistants, cellular phones, smart phones (e.g., an IPHONE® device, a BLACKBERRY® device, an ANDROID® device, etc.), tablets, wearables (e.g., smart watches and smart glasses), Internet of Things (IOT) devices, or any other device capable of receiving data over network and/or the like and may allow a user to transmit a request to view lamp operating time data.

Gateway 212 may be in electronic communication with controller 204 and manufacturer system 214. Gateway 212 may comprise hardware and/or software configured as a communications interface which allows software and data to be transferred between aircraft 10 and external devices. Examples of communications interfaces may include a modem, a network interface (such as an Ethernet card), a communications port, BLUETOOTH ®, TCP/IP, or near field communications (NFC), wifi and other radio frequency (RF) forms of communication and/or the like. In various embodiments, gateway 212 may be an internet of things (IoT) gateway in communication with a cloud based machine learning system. Software and data transferred via the communications interface are in the form of signals which may be electronic, electromagnetic, optical, or other signals capable of being received by communications interface. These signals are provided to communications interface via a communications path (e.g., channel). This channel carries signals and may be implemented using wire, cable, fiber optics, a telephone line, a cellular link, a RF link, wireless and other communications channels. The system may include or interface with any of the foregoing accounts, devices, and/or a transponder and reader (e.g., RFID reader) in RF communication with the transponder (which may include a fob), or communications between an initiator and a target enabled by NFC. Typical devices may include, for example, a key ring, tag, card, cell phone, wristwatch, or any such form capable of being presented for interrogation.

Moreover, the system, computing unit or device discussed herein may include a "pervasive computing device," which may include a traditionally non-computerized device that is embedded with a computing unit. Examples may include watches, internet-enabled home appliances, restaurant tables embedded with RF readers, wallets or purses with imbedded transponders, etc. Furthermore, a device or financial transaction instrument may have electronic and communications functionality enabled, for example, by: a network of electronic circuitry that is printed or otherwise incorporated onto or within the transaction instrument (and typically referred to as a "smart card"); a fob having a transponder and an RFID reader; and/or near field communication (NFC) technologies. For more information regarding NFC, refer to the following specifications: ISO/IEC 18092 / ECMA-340, Near Field Communication Interface and Protocol-1 (NFCIP-1); ISO/IEC 21481 / ECMA-352, Near Field Communication Interface and Protocol-2 (NFCIP-2); and EMV 4.2 available at www.emvco.com. Software and data transferred via communications interface are in the form of signals which may be electronic, electromagnetic, optical or other signals capable of being received by communications interface. These signals are provided to communications interface via a communications path (e.g., channel). This channel carries signals and may be implemented using wire, cable, fiber optics, a telephone line, a cellular link, a radio frequency (RF) link, wireless and other communications channels.

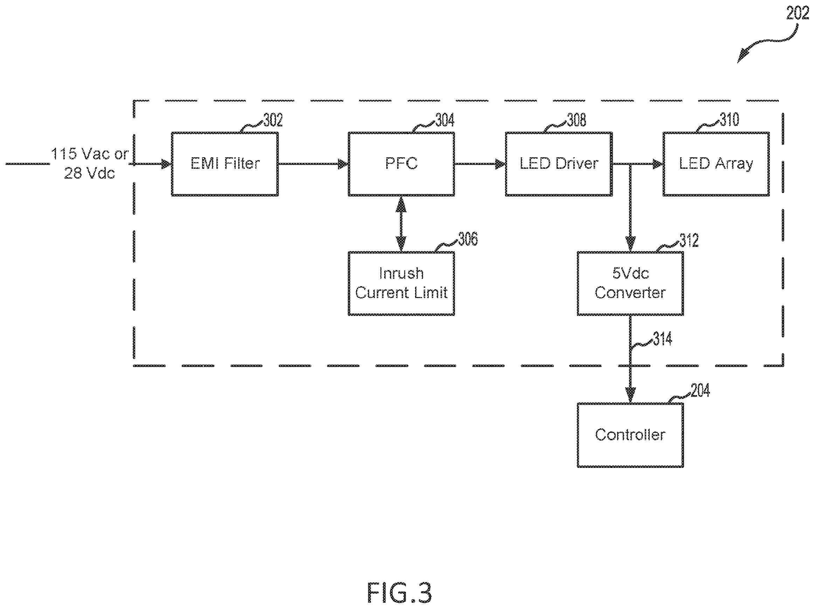

In various embodiments and with additional reference to FIG. 3, a block diagram of lamp assembly 202 is illustrated. Lamp assembly 202 may comprise an electromagnetic interference (EMI) filter module 302, a power factor correction (PFC) module 304, an inrush current limit module 306, a LED driver module 308, a LED array 310, and/or a DC converter module 312. The EMI filter may receive 115 Vac or 28 Vdc power from the power supply and supply filtered power to the PFC module 304. The PFC module 304 may receive filtered power from the EMI filter module 302 and may tend to increase the power factor of the filtered power toward unity. In this regard, the PFC module 304 may tend to improve the power quality by reducing losses and improving voltage regulation. The LED driver module 308 may receive power from the PFC and drive an LED array 310. The LED driver module 308 may supply power to a DC converter module 312. DC converter module 312 may receive conditioned 115 Vac or 28 Vdc power from the LED driver module 308 and convert the conditioned power to 5 Vdc power for a controller such as controller 204.

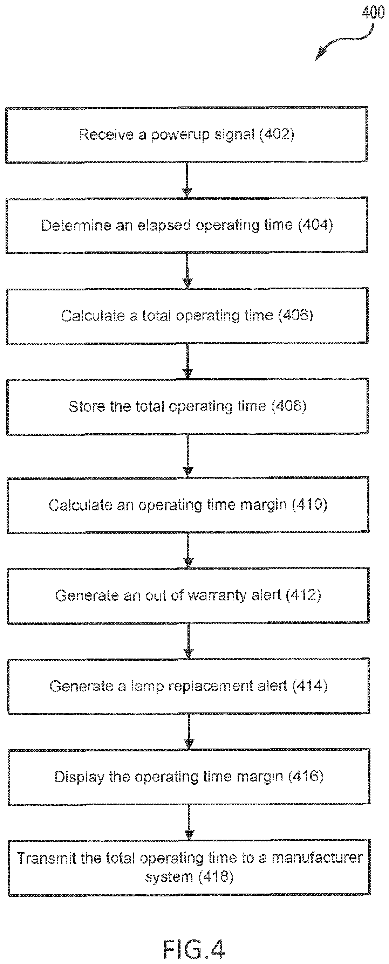

In various embodiments and with additional reference to FIG. 4, a process flow 400 in a cloud-based lamp health monitoring system 200 is illustrated. The system may receive a powerup signal from a lamp assembly (step 402). Controller 204 may receive a powerup signal 314 from lamp assembly 202. In various embodiments, the power up signal may be a 5 Vdc voltage signal. Step 402 may include receiving by DC converter module 312 a conditioned power from LED driver module 308 and transmitting a 5 Vdc signal to controller 204. The system may determine an elapsed operating time of a lamp assembly (step 404). For example, controller 204 may determine the elapsed operating time of the lamp assembly 202 based on the powerup signal 314 which may be present while power is applied to the lamp assembly 202 and absent while power is removed from the lamp assembly 202. Step 404 may include controller 204 starting a real-time clock in response to the powerup signal. In various embodiments, the real-time clock may run only when the 5 Vdc signal is applied.

In various embodiments, controller 204 may stop the real-time clock in response to loss of the powerup signal. In this regard, the elapsed operating time may be determined between the intermittent periods of the powerup signal. The system may calculate a total operating time of the lamp assembly (step 406). For example, controller 204 or manufacturer system 214 may calculate a total operating time of lamp assembly 202 based on the elapsed operating time or the change between real-time clock readings. For example, controller 204 may include an elapsed time counter module which counts total elapsed time that the powerup signal is applied or may sum the periods of elapsed operating time. Step 406 may include determining a total count of on/off cycles for lamp assembly 202. The system may store the total operating time (step 408). For example, controller 204 may store the total operating time or may transmit data 218 such as real-time clock readings via gateway 212 to manufacturer system 214.

In various embodiments, controller 204 or manufacturer system 214 may calculate an operating time margin based on the total operating time and a warranty threshold (step 410). The warranty threshold may be a configurable constant stored in manufacturer system 214 such as, for example, a number of hours or a number of on/off cycles. In various embodiments, and the operating time margin may be determined as a percent or value remaining between the constant and the total operating time and/or the total count of on/off cycles. Step 410 may include storing the operating time margin in manufacturer system 214.

The system may generate an out of warranty alert in response to the operating time margin (step 412). For example, when the operating time margin is 0% and/or the total operating time equals the warranty time threshold, manufacturer system 214 may transmit an out of warranty alert message to user device 216. In various embodiments, the system may generate an out of warranty alert when the total on/off cycle count exceeds the warranty threshold. In like regard, the system may generate a lamp replacement alert in response to the operating time margin (step 414). In various embodiments, the lamp replacement alert may be generated as a function of a replacement threshold such as, for example, a number of hours or a number of on/off cycles. For example, when the operating time margin is 5%, or when the total operating time is 100 hours less than the warranty threshold, or when the total number of on/off cycles is 100 less than the warranty threshold, and/or the like, manufacturer system 214 may transmit a replacement alert message to user device 216. In various embodiments, the lamp replacement alert may be generated in response to a lamp health function. The lamp health function may be a machine learning algorithm of manufacturer system 214 based on the data 218 associated on a one-to-one basis with lamp assembly 202 including a luminosity data, a real-time clock data, and a temperature data.

The system may display the operating time margin in response to a request to view lamp operating time data (step 416). Manufacturer system 214 may receive a request to view lamp operating time data from user device 216. Manufacturer system 214 may display a dashboard on user device 216 comprising the plurality of exterior lamps 14 associated with aircraft 10. The manufacturer system 214 may calculate the current operating time margin for each of the lamp assemblies 202 based on the associated data and the dashboard may include a display of each of the associated current operating time margin.

The system may receive a sensor data and transmit the total operating time to a manufacturer system in response to the sensor data (step 418). For example, sensors 210 may transmit a weight-on-wheels signal to controller 204. Controller 204 may enable gateway 212 and transmit data 218 such as a plurality of real-time clock values associated on a one-to-one basis with a plurality of lamp assemblies 202 to manufacturer system 214. Step 418 may include determining a network status and transmitting the data 218 in response to the network status. For example, the network status may include the presence or absence of a network signal and/or a specific network.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

As used herein, "satisfy," "meet," "match," "associated with" or similar phrases may include an identical match, a partial match, meeting certain criteria, matching a subset of data, a correlation, satisfying certain criteria, a correspondence, an association, an algorithmic relationship and/or the like. Similarly, as used herein, "authenticate" or similar terms may include an exact authentication, a partial authentication, authenticating a subset of data, a correspondence, satisfying certain criteria, an association, an algorithmic relationship and/or the like.

As used herein, the term "network" includes any cloud, cloud computing system or electronic communications system or method which incorporates hardware and/or software components. Communication among the parties may be accomplished through any suitable communication channels, such as, for example, a telephone network, an extranet, an intranet, Internet, point of interaction device (point of sale device, personal digital assistant (e.g., IPHONE®, BLACKBERRY®), cellular phone, kiosk, etc.), online communications, satellite communications, off-line communications, wireless communications, transponder communications, local area network (LAN), wide area network (WAN), virtual private network (VPN), networked or linked devices, keyboard, mouse and/or any suitable communication or data input modality. Moreover, although the system is frequently described herein as being implemented with TCP/IP communications protocols, the system may also be implemented using IPX, APPLE®talk, IP-6, NetBIOS®, OSI, any tunneling protocol (e.g. IPsec, SSH), or any number of existing or future protocols. If the network is in the nature of a public network, such as the Internet, it may be advantageous to presume the network to be insecure and open to eavesdroppers. Specific information related to the protocols, standards, and application software utilized in connection with the Internet is generally known to those skilled in the art and, as such, need not be detailed herein. See, for example, Dilip Naik, Internet Standards and Protocols (1998); JAVA® 2 Complete, various authors, (Sybex 1999); Deborah Ray and Eric Ray, Mastering HTML 4.0 (1997); and Loshin, TCP/IP Clearly Explained (1997) and David Gourley and Brian Totty, HTTP, The Definitive Guide (2002), the contents of which are hereby incorporated by reference.

"Cloud" or "Cloud computing" includes a model for enabling convenient, on-demand network access to a shared pool of configurable computing resources (e.g., networks, servers, storage, applications, and services) that can be rapidly provisioned and released with minimal management effort or service provider interaction. Cloud computing may include location-independent computing, whereby shared servers provide resources, software, and data to computers and other devices on demand.

As used herein, "transmit" may include sending electronic data from one system component to another over a network connection. Additionally, as used herein, "data" may include encompassing information such as commands, queries, files, data for storage, and the like in digital or any other form.

## Claims

1. A method, comprising:
receiving, by a processor (204), a powerup signal (314) from a lamp assembly (202);
determining, by the processor (204), an elapsed operating time of the lamp assembly (202) based on the powerup signal (314);
calculating, by the processor (204), a total operating time based on the elapsed operating time; and
storing, by the processor (204), the total operating time.

2. The method of claim 1, further comprising calculating, by the processor (204), an operating time margin based on the total operating time and a warranty threshold.

3. The method of claim 2, further comprising generating, by the processor (204), an out of warranty alert in response to the operating time margin.

4. The method of claim 2 or 3, further comprising generating, by the processor (204), a lamp replacement alert in response to the operating time margin.

5. The method of any of claims 2 to 4, further comprising displaying, by the processor (204) and via a warranty dashboard, the operating time margin in response to a request to view lamp operating time data.

6. The method of any preceding claim, further comprising:
receiving, by the processor (204), a sensor data; and
transmitting, by the processor (204), the total operating time to a manufacturer system (214) in response to the sensor data.

7. An article of manufacture including a tangible, non-transitory computer-readable storage medium having instructions stored thereon that, in response to execution by a processor (204), cause the processor (204) to perform the method of any preceding claim.

8. A cloud-based lamp health monitoring system (200) comprising:
a lamp assembly (202) in electronic communication with a controller (204); and
a tangible, non-transitory memory configured to communicate with the controller (204), the tangible, non-transitory memory having instructions stored thereon that, in response to execution by the controller (204), cause the controller (204) to perform operations comprising:
receiving, by the controller (204), a powerup signal (314) from the lamp assembly (202);
determining, by the controller (204), an elapsed operating time of the lamp assembly (202) based on the powerup signal (314);
calculating, by the controller (204), a total operating time based on the elapsed operating time; and
storing, by the controller (204), the total operating time.

9. The cloud-based lamp health monitoring system (200) of claim 8, wherein the operations further comprise calculating, by the controller (204), an operating time margin based on the total operating time and a warranty threshold.

10. The cloud-based lamp health monitoring system (200) of claim 9, wherein the operations further comprise generating, by the controller (204), an out of warranty alert in response to the operating time margin.

11. The cloud-based lamp health monitoring system (200) of claim 9 or 10, wherein the operations further comprise generating, by the controller (204), a lamp replacement alert in response to the operating time margin.

12. The cloud-based lamp health monitoring system (200) of any of claims 9 to 11, wherein the operations further comprise displaying, by the controller (204) and via a warranty dashboard, the operating time margin in response to a request to view lamp operating time data.

13. The cloud-based lamp health monitoring system (200) of any of claims 8 to 12, wherein the operations further comprise:
receiving, by the controller (204), a sensor data; and
transmitting, by the controller (204), the total operating time to a manufacturer system (214) in response to the sensor data.

14. The cloud-based lamp health monitoring system (200) of any of claims 8 to 13 or the article of manufacture of claim 7, wherein the lamp assembly (202) comprises at least one of a landing light (16), a taxi light (17), or a navigation light (18).
